Europäisches Patentamt

European Patent Office

Office européen des brevets

(19)

(11) Veröffentlichungsnummer: **0 226 726**
**A2**

(12) **EUROPÄISCHE PATENTANMELDUNG**

(21) Anmeldenummer: **86113287.6**

(22) Anmeldetag: **26.09.86**

(51) Int. Cl.⁴: **G02B 26/02**

(30) Priorität: **28.10.85 CH 4631/85**

(43) Veröffentlichungstag der Anmeldung:
**01.07.87 Patentblatt 87/27**

(84) Benannte Vertragsstaaten:
**AT BE DE FR GB IT NL SE**

(71) Anmelder: **Elektro-Apparatebau Olten AG**
**Tannwaldstrasse 88**
**CH-4600 Olten(CH)**

(72) Erfinder: **Bichsel, Daniel**
**Grienweg 13**
**CH-4147 Aesch(CH)**
Erfinder: **Plüss, Martin**
**Lerchmattstrasse 6**
**CH-4663 Aarburg(CH)**

(74) Vertreter: **EGLI-EUROPEAN PATENT**
**ATTORNEYS**
**Horneggstrasse 4**
**CH-8008 Zürich(CH)**

(54) **Optische Schalteinrichtung.**

(57) Die Schalteinrichtung ist mit einem elektro-optischen Wandler versehen, der einen optischen Verzweiger (7) und daran angeschlossen eine erste und eine zweite, sichtbares Licht sendende Lichtquelle (4,5) sowie einen Lichtfühler (6) aufweist. Am optischen Verzweiger (7) ist weiter ein optisch-mechanischer Wandler mit einem Lichtleiter (2) angeschlossen. In jenem führt ein Lichtpfad (40,41,42) vom Lichtleiterende zu einem Anzeigefenster. Im Lichtpfad sind für das Licht der zweiten Lichtquelle (5) durchlässige Reflexionsmittel (38) in Abhängigkeit der Funktionsstellung des optischmechanischen Wandlers in ihrer Lage veränderbar. Um unabhängig von der Lage der Reflexionsmittel eine hinsichtlich Helligkeit und Farbton gleiche Leuchtanzeige ermöglichen zu können, ist vorgesehen, dass der Lichtpfad (40,41,42) zwischen dem Ende des Lichtleiters (2) und dem Fenster (32) einen sich konisch erweiternden Bereich (41) aufweist. Die Reflexionsmittel (38) sind in diesem Bereich (41) in Richtung des Lichtpfades zwischen zwei den Funktionsstellungen entsprechenden Endlagen hin-und her verschiebbar angeordnet und die zum Lichtpfad rechtwinklig orientierte Querschnittsfläche der Reflexionsmittel ist mindestens gleich der kleinsten Querschnittfläche des erwähnten konischen Bereiches.

FIG. 4

## Schalteinrichtung

Die vorliegende Erfindung bezieht sich auf eine Schalteinrichtung gemäss dem Oberbegriff des Patentanspruches 1.

Eine derartige Schalteinrichtung ist beispielsweise in der US-PS 4 315 147 (Harmer) beschrieben. Diese bekannte Vorrichtung arbeitet mit zwei Lichtquellen, von denen eine mit einem Fotosensor zusammenwirkt, um Schaltvorgänge auszulösen. Die zweite Lichtquelle dagegen hat den Zweck, an einem Fenster in der Sichtseite der Taste den Schaltzustand optisch anzuzeigen. Als Reflexionsmittel dient ein Selektivspiegel, der einerseits sichtbares Licht durchlässt und anderseits Infrarotlicht reflektiert. Diese Vorrichtung ist darauf angewiesen, einerseits mit unsichtbarem Licht für das Erteilen der Schaltbefehle und anderseits mit sichtbarem Licht für die optische Befehlsvollzugsmeldung zu arbeiten. Daraus ergibt sich, dass die Wellenlängen der Lichtquellen vergleichsweise weit auseinander liegen müssen, wodurch deren Licht in allen Lichtleitern einer unterschiedlichen Dämpfung unterliegt. Die Länge des Lichtleiters ist daher entsprechend der ungünstigereren Dämpfung zu wählen und damit begrenzt. Würden beide Lichtquellen mit sichtbarem Licht betrieben, ergäbe sich der Nachteil, dass bei gedrückter und ungedrückter Taste die Anzeige des Schaltzustandes in unterschiedlichem Farbton erfolgen würde, was für eine Bedienungsperson verwirrend ist.

Die vorliegende Erfindung stellt sich die Aufgabe, eine Vorrichtung der erwähnten Art derart zu verbessern, dass sie mit zwei sichtbaren Lichtquellen arbeiten kann, ohne dass die optische Anzeige des Schaltzustandes bei gedrückter oder ungedrückter Taste in erkennbarem Helligkeits-und Farbton-Unterschied erfolgt.

Erfindungsgemäss wird diese Aufgabe gelöst durch die kennzeichnenden Merkmale des Anspruches 1.

Anhand der beiliegenden schematischen Zeichnung wird die Erfindung beispielsweise erläutert. Es zeigen:

Fig. 1 eine schematische Darstellung einer Schalteinrichtung,

Fig. 2 einen Verzweiger in vergrösserter Darstellung,

Fig. 3 eine Schnitt längs der Linie III -III in Fig. 2 und

Fig. 4 einen Längsschnitt durch einen optisch mechanischen Wandler.

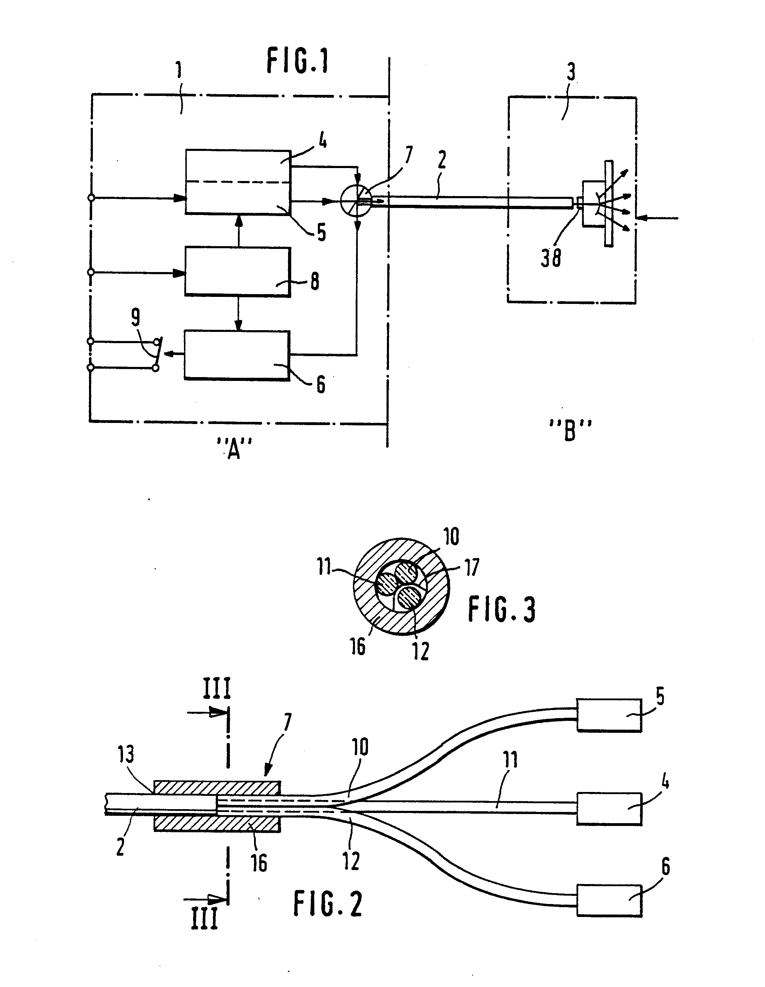

Bei der in Fig. 1 gezeigten Schalteinrichtung ist ein elektro-optischer Wandler 1 in neutraler Umgebung "A" angeordnet und durch einen einadrigen, ummantelten Lichtleiter 2 mit einem optisch-mechanischen Wandler 3 in einer nicht neutralen, z.B. explosionsgefährdeten Umgebung verbunden. Der elektro-optische Wandler weist z.B. eine erste Quelle sichtbaren Lichtes 4, eine zweite Quelle 5 sichtbaren Lichtes sowie eine Photosensor 6 und eine optischen Viertorverzweiger 7 auf. Wesentlich an den beiden Lichtquellen ist, dass das Licht des einen hinsichtlich seiner Wellenlänge vom Licht des anderen verschieden ist. Entsprechend ist die Empfindlichkeit des Empfängers 6 auf die Wellenlänge des Lichts der ersten Lichtquelle 4 abgestimmt. Die Teile 4, 5 und 6 sind mit einer Speisung 8 versehen. Der Photosensor 6 ist in Wirkverbindung mit einem Schaltteil 9 in einer stromführenden Befehls-oder Meldeleitung. Vom Schaltteil 9 führt eine Rückmeldeleitung zur Quelle 5 sichtbaren Lichts. Führt das Schaltteil 9 einen Ein-oder Ausschaltvorgang aus, erwirkt es gleichzeitig ein Rückmeldesignal zur Lichtquelle 5 und - schaltet diese ein oder aus. Entsprechend wird der Schaltzustand bzw. der Befehlsvollzug am optomechanischen Wandler 3 angezeigt.

Der Verzweiger 7 ist in den Fig. 2 und 3 dargestellt. Diese weist eine im Querschnitt ringzylindrische Manschette 16 auf, in die von einer Seite der Lichtleiter 2 gesteckt ist. Das erste, zweite und dritte Tor 11, 12, 13 sind durch ebenfalls einadrige Lichtleiter gebildet, welche von der gegenüber liegenden Seite in die Manschette 16 bis zum stirnseitigen Kontakt mit dem Lichtleiter 2 gesteckt sind. Der Durchmesser der die Tore 10, 11, 12 bildenden einadrigen Lichtleiter ist näherungsweise gleich dem halben Durchmesser des Lichtleiters 2. Im Verzweiger 7 ist (Fig.3) das dritte Tor 12 vom ersten und zweiten Tor 10 bzw. 11 durch eine Abschirmung 17 getrennt. Die Abschirmung kann eine lichtundurchlässige Schicht oder eine Schicht mit verschiedenem Brechungskoeffizient sein.

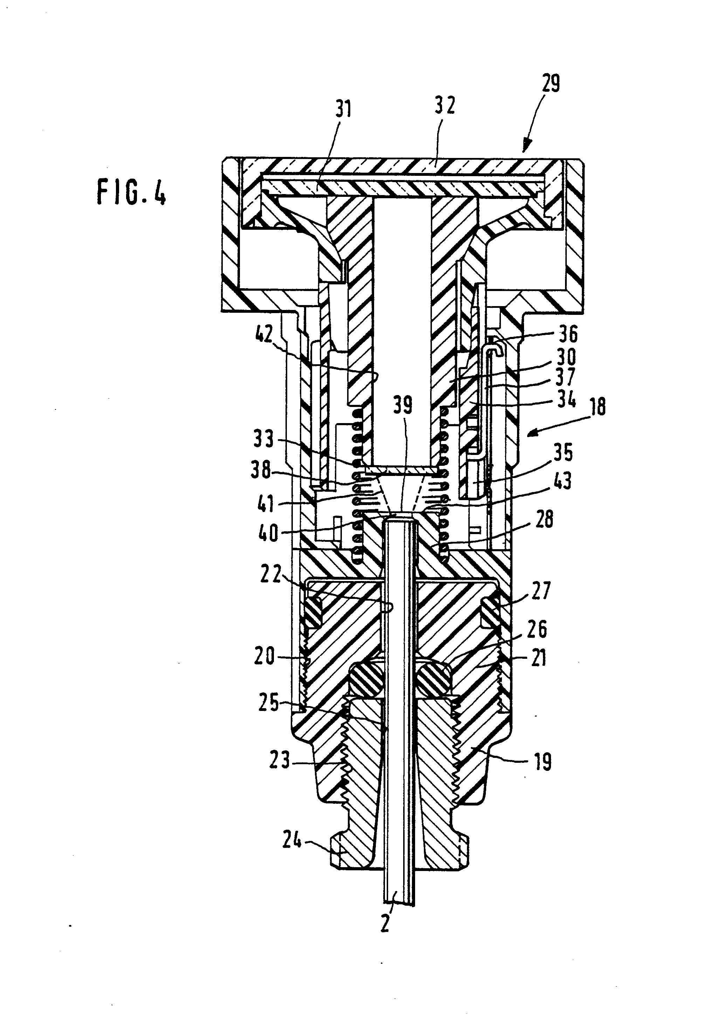

Fig. 4 zeigt eine Ausführungsform eines optisch-mechanischen Wandlers 3. Dieser weist ein Gehäuse 18 mit einem Rückteil 19 auf, der mit dem Gehäusevorderteil mittels einer Gewindeverbindung 20 verschraubt ist. Das Rückteil 19 besteht aus einem zylindrischen Körper 21 mit einer achsialen Bohrung 22 an die nach hinten eine Gewindebohrung 23 grösseren Durchmessers anschliesst. In diese ist eine Hohlschraube 24 mit einer zur Bohrung 22 koachsialen Bohrung 25 geschraubt, durch welche der Lichtleiter 2 geführt ist. Zum Festspannen des Lichtleiters 2 ist am Grund der Gewindebohrung 23 ein gummielastischer Ring 26 angeordnet, der durch die Hohlschraube 24 zusammengepresst ist und den Lichtleiter 2 kraftschlüssig festhält. Das Rückteil 19 ist form-und/oder kraftschlüssig mit dem übrigen Gehäuse sowie mittels einem Dichtungsring fest bzw. dicht verbunden. Das Ende des Lichtleiters 2 liegt im Wandlergehäuse 18 in einem im Querschnitt ringzylindrischen Lager 28. Koachsial zum Lager 28 ist im Gehäuse 18 eine Taste 29 mit einem rohrförmigen Teil 30 angeordnet, das am oberen Ende an einen Farbfilter 31 grenzt, der von einer neutralen, lichtdurchlässigen Kalotte 32 abgedeckt ist.

An die endseitige Stirnfläche 39 des Lichtleiters 2 schliesst axial ein geradlinig zur Kalotte 32 führender Lichtpfad an, der im wesentlichen aus einer Bohrung 40, einem sich konisch ausweitenden Abschnitt 41 und einer anschliessenden, verspiegelten Innerzylinderfläche 42 oder Lichtleiter-Zylinder im rohrförmigen Teil 30 besteht. Am unteren Ende ist der rohrförmige Teil 30 mit einem optischen Selektivspiegel 38 abgeschlossen, welcher das Licht der ersten Lichtquelle 4 reflektiert und jenes der zweiten Lichtquelle 5 durchlässt, sodass in keiner Stellung des Selektivspiegels 38 der Lichtpfad vollständig unterbrochen ist. Durch eine Druck auf die Taste 29 wird der Seletivspiegel 38 zwischen zwei Endlagen bewegt. In der einen Endlage liegt er gegen die Stirnfläche 43 des Lagers 28 an und nimmt in der anderen Endlage, das heisst in der ungedrückten Stellung, die in Figur 4 mit ausgezogenen Strichen gezeichnete Lage ein. Die zum·Lichtpfad rechtwinklig·orientierte Querschnittsfläche des Selektivspiegels 38 ist derart dimensioniert, dass sie den konischen Abschnitt 41 allseits überragt. Dadurch ist ausgeschlossen, dass weder in den Endlagen des Selektivspiegels 38 noch in irgendeiner Zwischenstellung Licht der ersten Lichtquelle 4 bis zur Kalotte 32 gelangen und dort in irgendeiner Weise den Farbton der Leuchtanzeige beeinflussen kann.

Die axiale Verschiebbarkeit des Selektivspiegels innerhalb des konischen Bereiches 41 des Lichtpfades hat den Vorteil, dass die reflektierte Lichtmenge sich im Quadrat des Abstandes des Selektivspiegels 38 von der Stirnfläche 39 verändert, wodurch äusserst kleine Schaltwege für die Taste 29 notwendig sind, um über den Photosensor einen Schaltvorgang auszulösen. Dieser Vorteil wird auch dann erreicht, wenn der zum Lichtpfad rechtwinklig orientierte Querschnitt des Selektiv spiegels 39 gleich gross wie die kleinste Querschnittsfläche des konischen Bereiches 41 des Lichtpfades ist. Bei dieser Ausführungsform gelangt Licht der ersten Lichtquelle 4 bei der in Figur 4 gezeigten Tastenlage in geringen Mengen zur Kalotte 32, ohne indessen in erkennbarer Weise Farbton und Helligkeit der Leuchtanzeige zu verändern.

Die Taste 29 wird gegen die Wirkung einer Feder 33 achsial in das Gehäuse 18 gedrückt und weist einen den Teil 30 umgebenden Mantel 34 auf, auf dessen Aussenseite eine herzförmige Nut 35 angebracht ist, in die das abgekröpfte Ende eines bei 36 schwenkbar gelagerten Hebels greift. Dadurch wird die Taste 29 in bekannter Weise bei einem Tastendruck in der gedrückten Stellung gehalten und beim folgenden Tastendruck freigegeben, so dass sie durch die sich entspannende Feder 33 in die Ausgangslage zurückkehrt. Diese Rastfunktion des optisch-mechanischen Wandlers kann durch Entfernen des Hebels 37 in eine Impulsfunktion umgewandelt werden.

## Ansprüche

1. Schalteinrichtung mit einem elektro-optischen Wandler, der einen optischen Verzweiger - (7) und daran angeschlossen eine erste und eine zweite, sichtbares Licht sendende Lichtquelle (4,5) sowie einen Lichtfühler (6) aufweist, wobei weiter an den optischen Verzweiger (7) ein Lichtleiter (2) angeschlossen ist, der zu einem als Befehlsgerät - (3) ausgebildeten optisch-mechanischen Wandler führt, wo ein zu einem Anzeigefenster (32) führender Lichtpfad (40,41,42) an den Lichtleiter - (2) anschliesst, in dem für das Licht der zweiten Lichtquelle (5) durchlässige Reflexionsmittel (38) in Abhängigkeit der Funktionsstellung des optischmechanischen Wandlers ihre Lage verändern und das Licht der ersten Lichtquelle (4) entsprechend stärker oder schwächer reflektieren, dadurch gekennzeichnet, dass der Lichtpfad (40,41,42) zwischen dem Ende des Lichtleiters (2) und dem Fenster (32) einen sich konisch erweiternden Bereich (41) aufweist, dass die Reflexionsmittel (38) in diesem Bereich (41) in Richtung des Lichtpfades zwischen zwei den Funktionsstellungen entsprechenden Endlagen hin-und her verschiebbar angeordnet ist, und dass die zum Lichtpfad rechtwinklig orientierte Querschnittsfläche der Reflexionsmittel mindestens gleich der kleinsten Querschnittfläche des erwähnten konischen Bereiches ist.

2. Schalteinrichtung nach Anspruch 1, dadurch gekennzeichnet, dass die Querschnittsfläche der Reflexionsmittel (38) in jeder Stellung die entsprechende Querschnittsfläche des konischen Bereiches (41) allseits überragt.

3. Schalteinrichtung nach einem der Ansprüche 1 oder 2, dadurch gekennzeichnet, dass im elektrooptischen Wandler (1) beide Lichtquellen sichtbares Licht jedoch unterschiedlicher Wellenlänge senden.

4. Schalteinrichtung nach Anspruch 1, dadurch gekennzeichnet, dass im elektro-optischen Wandler (1) die erste Lichtquelle (4) unsichtbares Licht sendet, wobei die zweite Lichtquelle (5) in Abhängigkeit der Funktionsstellung des optisch-mechanischen Wandlers (3) ein-oder ausgeschaltet ist.

5. Optischer Verzweiger, insbesondere für eine Schalteinrichtung nach einem der Ansprüche 1 bis 4, dadurch gekennzeichnet, dass die Tore - (10,11,12) für das Einkoppeln des Lichts der beiden Lichtquellen und das Tor zum Auskoppeln des Lichts der zweiten Lichtquelle (4) zum Lichtfühler - (6) durch parallel aneinanderliegende Lichtleiter - (10,11,12) gebildet sind, und dass im Bereich des Verzweigers (7) die Tore (11,12) für das Ein-und Auskoppeln des Lichts der zweiten Lichtquelle gegeneinander abgeschirmt sind.

6. Optischer Verzweiger nach Anspruch 5, dadurch gekennzeichnet, dass die optische Verzweiger (7) eine lichtundurchlässige Manschette - (16) aufweist in die von einer Seite das eine Ende des erwähnten Lichtleiters (2) und von der anderen Seite die Enden der drei weiteren Tore (10,11,12) bildenden Lichtleiter bis zur stirnseitigen Berührung mit dem ersterwähnten Lichtleiter (2) gesteckt sind, und dass im Bereich der Manschette (16) der für das Auskoppeln des reflektierten Lichtes der zweiten Lichtquelle (5) bestimmte weitere Lichtleiter - (12) von den parallel anliegenden Lichtleitern - (10,11) durch eine lichtundurchlässige Schicht (17) getrennt ist.

FIG.1

"A"   "B"

FIG.3

FIG.2

III   III

FIG. 4